Europäisches Patentamt

European Patent Office

Office européen des brevets

(11) Numéro de publication: **0 063 526**
**A1**

(12) **DEMANDE DE BREVET EUROPEEN**

(21) Numéro de dépôt: **82400682.9**

(22) Date de dépôt: **16.04.82**

(51) Int. Cl.³: **C 04 B 15/02**
**C 04 B 21/08**

(30) Priorité: **17.04.81 FR 8107757**

(43) Date de publication de la demande:
**27.10.82 Bulletin 82/43**

(84) Etats contractants désignés:
**AT BE CH DE GB IT LI LU NL SE**

(71) Demandeur: **Aury, Jean-Pierre**
**Route de la Butte du Moulin Poigny la Forêt**
**Rambouillet (Yvelines)(FR)**

(72) Inventeur: **Aury, Jean-Pierre**
**Route de la Butte du Moulin Poigny la Forêt**
**Rambouillet (Yvelines)(FR)**

(74) Mandataire: **Rataboul, Michel**
**Cabinet Michel Rataboul 69, rue de Richelieu**
**F-75002 Paris(FR)**

(54) **Béton isolant ainsi que son procédé de fabrication.**

(57) L'invention concerne un béton dont l'agrégat comprend au moins deux composants dont les densités apparentes sont différentes et sont coordonnées avec la densité apparente du liant hydraulique pour que ces densités aient des valeurs qui soient à la fois distinctes et échelonnées de manière aussi régulière que possible.

Après moulage et vibration de l'ensemble du moule, on obtient une pièce 4 dont la face 4b devant être visible (à l'extérieur du bâtiment) est démunie de granulat isolant, lequel est concentré sur la partie opposée 4a de la pièce 4.

L'échelonnement des densités est régulier pour éviter toute solution de continuité

FIG 2

### Béton isolant et son procédé de fabrication

Les bétons de génie civil présentent des caractéristiques techniques bien connues telles que : résistance à la flexion, résistance à la compression, etc... et ont généralement un aspect terne et une couleur grise qui donnent à l'ouvrage terminé un aspect si déplaisant que l'on est conduit bien souvent à prévoir un revêtement : aluminium, pierre artificielle, etc...

On désigne par "architectonique" un béton qui présente des caractéristiques techniques au moins égales à celles des bétons classiques mais qui a, en plus, un aspect extérieur esthétique qui est obtenu soit automatiquement lors du décoffrage ou du démoulage, soit par un traitement de surface tel que le sablage ou grésage, notamment pour faire apparaître un granulat de matières et de couleurs convenablement choisies.

La présente invention permet de donner une troisième fonction à un béton de génie civil, cette fonction étant d'assurer une isolation thermique et phonique.

On connaît déjà des bétons dont la composition permet d'assurer une isolation thermique et/ou phonique. C'est le cas, notamment, du silicate d'alumine, de matériaux cellulaires tels que du verre expansé, etc...

Mais la présence de ces produits isolants est incompatible avec l'obtention d'un béton architectonique.

La raison principale de cette carence vient du fait que le composant isolant est réparti de manière homogène dans la masse coulée et apparaît, donc, sur la surface visible de la pièce terminée alors que ce composant a un aspect encore plus désagréable que le béton standard.

Pour pallier cet inconvénient, on peut soit rapporter un parement, soit préfabriquer les pièces en deux parties : un doublage extérieur d'aspect acceptable et un remplissage d'isolant dissimulé.

Dans le premier cas, on ne peut prévoir que des formes extérieures planes et plates. Dans le second cas, on doit prévoir deux moulages différents.

En d'autres termes, pour les trois fonctions connues en elles-mêmes : résistance mécanique, apparence esthétique et isolation, on ne connaît que des bétons dont la composition permet seulement de satisfaire deux de ces conditions et non trois.

On connaît aussi le procédé décrit dans le brevet allemand 705.126 et selon lequel on agit par couches successives, comme cela est précisé dans ce brevet page 2, lignes 64 à 66.

Les couches ont des compositions différentes : la première est en béton ponce, sans agrégats, (page 2, lignes 56-57) et les autres sont en béton ponce additionné d'agrégats (page 2, ligne 61).

La première couche est légère et ne peut pas être vibrée (page 1, lignes 8 à 12). Alors, on place sur elle une couche lourde, contenant des agrégats et destinée à retenir la première couche légère.

Ce simple effet de poids est obtenu avec un seul agrégat et l'invention ne nécessite pas du tout la coordination de plusieurs agrégats ayant au moins trois fonctions différentes.

Il faut procéder à plusieurs vibrations successives et l'on comprend que la première vibration (page 2, lignes 63-63) a pour but de provoquer une faible interpénétration partielle entre la première couche (légère) de béton ponce et la deuxième couche (lourde) de béton ponce et de sable.

Dans ce brevet, il est prévu une granulométrie uniforme ( page 2 lignes 82 à 84) et située entre 0 et 7.

Ce brevet est muet à propos des densités apparentes, alors que pour la présente invention, des considérations liées aux densités apparentes sont importantes.

Selon l'invention on prévoit d'abord la constitution d'un mélange homogène unique dont les constituants doivent être répartis aussi uniformément que possible dans les trois dimensions du volume, par gâchage.

Ce mélange reste homogène lors du remplissage du moule.

On remplit le moule en se gardant bien que des couches se différencient puisque l'on veut éviter toute solution de continuité en vue d'éviter tout clivage.

On remarque que celà est diamétralement opposé aux dispostions du brevet allemand 705.126 qui prévoit au contraire la prévision de couches successives et indépendamment vibrées.

Selon l'invention on procède à une seule action de vibration pour obtenir un étagement des composants par densité dans toute la masse et pour tous ses composants.

Avec une pièce conforme à l'invention, on voit qu'en tous points de son épaisseur se trouvent tous les composants convenablement mélangés mais en proportion différente selon que l'on se place près de la face qui était au fond du moule lors de la vibration ou près de la face qui était en surface.

L'invention prévoit une distinction, un échelonnement et une coordination des densités apparentes des composants ( au moins deux mais aussi trois, quatre, ou cinq etc...) et du liant lui-même.

L'invention permet d'obtenir un béton isolant homogène donnant naissance à une pièce finie de bel aspect, le tout en une seule opération de moulage.

L'invention sera mieux comprise par la description détaillée ci-après faite en référence au dessin annexé. Bine entendu la description et le dessin ne sont donnés qu'à titre d'exemple indicatif et non limitatif.

La figure 1 est une vue schématique en coupe illustrant un procédé conforme à l'invention dans sa phase de coulage dans un moule et de vibration de l'ensemble.

La figure 2 est une vue schématique en coupe montrant une pièce obtenue avec un béton et selon le procédé conformes à l'invention.

La figure 3 est un diagramme illustrant la répartition des composants du béton selon leur densité apparente.

Les figures 4 et 5 sont deux vues schématiques partielles de pièces obtenues avec un béton et un procédé conformes à l'invention, selon deux variantes.

Un béton selonl'invention est du type comprenant un liant hydraulique et un agrégat devant être mélangés ét gâchés avec de l'eau, l'agrégat ayant un composant au moins qui est constitué d'un matériau alvéolaire à cellules fermées tel que la pierre ponce, et est caractérisé en ce que l'agrégat comprend au moins deux composants dont les densités apparentes sont différentes et sont coordonnées avec la densité apparente du liant hydraulique pour que ces densités aient des valeurs qui soient à la fois distinctes et échelonnées de manière aussi régulière que possible depuis la densité apparente du liant hydraulique qui a la valeur la plus faible.

4

Selon une caractéristique de l'invention, les constituants du béton, c'est-à-dire le liant hydraulique, les composants de l'agrégat, l'eau de gâchage et, le cas échéant, un ou plusieurs additifs connus en soi, sont présents dans une proportion relative telle que le béton ait, après gâchage, une consistance qui s'oppose à l'étagement effectif spontané des constituants.

Selon un mode de réalisation particulier de l'invention, le béton comprend les constituants ci-après, pour un volume final de 1 mètre cube :
- liant hydraulique de densité apparente
  d'environ 1 à 2,5 ............................... 280 à 380 kilos
- agrégats :
  . composant minéral tel que sable, gravillon
    ou analogue de densité apparente inférieure
    à 1,5 .......................................... 80 à 200 kilos
  . matériau alvéolaire de densité apparente
    inférieure à 0,8 ............................... 130 à 720 kilos
- eau :
  . pour le mouillage de l'agrégat .............. 60 à 180 kilos
  . pour le gâchage de l'ensemble ............... 140 à 200 kilos
- additifs éventuels ........................... en ajout

L'invention a également pour objet un procédé pour l'obtention de pièces à partir d'un béton tel que défini ci-dessus, caractérisé en ce que les constituants sont mélangés, mouillés et gâchés, puis que le produit obtenu est placé dans un moule étanche, puis que l'ensemble du moule et de son contenu est soumis à des vibrations d'intensité et de durée établies pour qu'en fin d'opération les constituants soient étagés sans être séparés par une solution de continuité, en vue d'éviter tout clivage.

Selon une caractéristique du procédé selon l'invention, après prise, durcissement et démoulage habituels, la pièce est soumise à un traitement obtenue de surface tel que sablage, grésage et analogue, sur celle de ses faces qui correspond à la plus grande proportion de constituant dont la densité apparente a la valeur la plus grande et qui, simultanément, est destinée à former le parement de la pièce.

Selon un mode de réalisation particulier, le fond du moule est recouvert, en tout ou en partie, d'un produit de démoulage ayant soit un effet retardateur de prise, soit de désactivation du liant hydraulique, afin de permettre le retrait de ce dernier sur la face correspondante de la pièce obtenue. par tout moyen connu.

5

0063526

Pour obtenir un béton conforme à l'invention,on utilise un liant hydraulique tel qu'un ciment Portland artificiel blanc ou gris ou bien un ciment à haute teneur en silice dont la densité apparente est comprise entre 1 et 2,5.

On utilise également du sable ou du gravillon de densité apparente inférieure à 1,2 et des granulats isolants de densité au plus égale à 0,7.

Selon la nature exacte des granulats,on utilise plus ou moins d'eau de mouillage pour amener les composants à leur taux d'humidité de travail, puis ces composants sont mis dans un malaxeur avec de l'eau de malaxage et, le plus souvent,un additif tel qu'un hydrofuge de masse,un entraineur d'air etc...

Pour obtenir 1 m3 de béton conforme à l'invention,on peut doser le liant hydraulique à raison de 300 à 350 kilos,le sable ou le gravillon à raison de 100 à 180 kilos, les granulats isolants à raison de 150 à 700 kilos,l'eau de mouillage pour 80 à 150 litres,l'eau de malaxage pour 160 à 180 litres,les additifs étant comptés en ajout.

Après mouillage et malaxage dans un malaxeur à béton traditionnel,le béton est transporté et coulé dans des moules étanches selon la méthode traditionnelle.

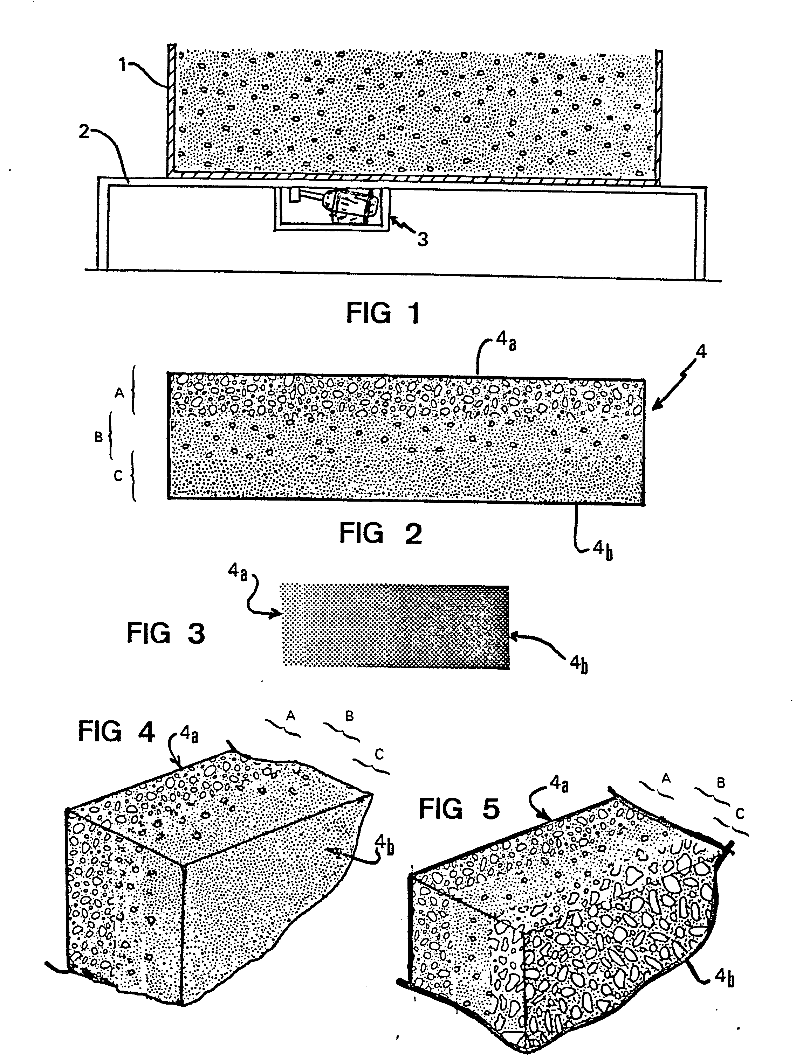

La figure 1 illustre cette phase du procédé conforme à l'invention où l'on voit qu'un moule 1 est placé sur une table 2 équipée d'un vibrateur 3 de tout type connu permettant d'imprimer à l'ensemble du moule et,par suite, à l'ensemble de la masse coulée,des vibrations dont l'importance est capitale pour obtenir les résultats visés par la présente invention.

En effet,il faut s'assurer que les vibrations ont des caractéristiques constantes afin que leur efficacité soit elle-même constante et l'on doit surveiller la durée de cette opération de vibration pour que l'on obtienne une mise en place régulière des différents composants en fonction de leur densité apparente relative.

Pour que l'étagement des composants soit bon et contrôlable,il faut que ces composants aient au moins trois densités apparentes très différentes, mais sans que ces différences provoquent une véritable hétérogénéité car il faut éviter le clivage et celà est obtenu grâce aux proportions de ces composants et grâce à la consistance du béton lors de sa mise en place d'où il résulte qu'un facteur important pour la mise en oeuvre de l'invention est le rapport $\frac{E}{C}$

c'est à dire que le rapport Eau/ciment doit donner la consistance voulue en fonction des composants, de la forme de la pièce et de la puissance des moyens vibratoires disponibles.

On voit sur la figure 2 une pièce obtenue avec le béton mis en place comme on vient de le décrire.

Naturellement, le caractère très schématique de ces dessins est évident et l'on ne saurait leur attribuer plus d'importance que celle qui leur est dévolue à savoir d'illustrer la présente description sans en fixer rigidement les limites.

On a représenté sur la figure 2 trois zones A,B et C qui correspondent respectivement à la fraction la plus légère, la fraction moyenne et la fraction la plus lourde du béton considéré.

En l'occurence, la fraction A est essentiellemnt composée des granulats isolants dont la densité apparente est au plus égale à 0,7 mais dans une masse comprenant bien entendu une partie du liant hydraulique et du sable.

La zone B correspond à une zone intermédiaire où l'on trouve encore des granulats légers mais en proportion moindre que dans la zone A, l'essentiel de cette zone B étant constitué par le sable et le gravillon.

La fraction C correspond à la fraction la plus lourde et en même temps au composant qui a le plus tendance à tomber au fond du mélange, dans un moule 1 lors des vibrations, ce qui donne une prédominance de sable mélangé au liant hydraulique qui donne à cette fraction C des caractéristiques de très grande dureté.

Il est essentièl que les trois zones A, B et C soient, dans la réalité, liées les unes aux autres afin d'éviter tout clivage et il est bon de s'assurer que le passage de la zone A à la zone C se fasse par une transition pratiquement continue sans aucune solution de continuité car celà provoquerait des zones d'affaiblissement qui pourraient aboutir à des amorces de rupture.

Sur la figure 3 on a tenté de schématiser par un diagramme le caractère continu de la variation de composition qui a pour conséquence qu'en tout point de l'épaisseur d'une pièce conforme à l'invention se trouvent tous les composants convenablement mélangés mais en proportion différente selon que l'on se trouve près de la face qui était au fond du moule lors des vibrations ou de la face qui était en surface lors de cette opération.

Pour éviter toute solution de continuité il faut éliminer le système de vibration, qui consiste à utiliser des aiguilles plongées dans la masse et déplacées de proche en proche.

Il est, au contraire, indispensable que l'ensemble de la masse soit mis en vibration, comme représenté schématiquement sur la figure 1, et cela par des moyens connus en soi mais dont la puissance doit être choisie de telle manière que les vibrations soient réparties de manière homogène dans toute la masse.

On peut être ainsi amené à utiliser plusieurs moyens vibratoires répartis sous la table 2 lorsque le moule 1 est de grandes dimensions tandis qu'un seul vibreur 3 peut être suffisant lorsque la pièce à obtenir est de faible volume.

La pièce 4 représentée sur la figure 2 est supposée destinée à constituer une partie de paroi d'un bâtiment et sa face 4a doit être située vers l'intérieur du bâtiment tandis que la face 4b doit être située à l'extérieur.

Le granulat isolant qui constitue une grande partie de la fraction A, assure la protection thermique et acoustique du bâtiment tandis que le ciment qui est prépondérant dans la zone C participe à la dureté de la face extérieure de la pièce 4 et constitue une "peau" de bel aspect.

Mais comme on l'a dit plus haut, le ciment n'est pas strictement localisé dans la zone C puisqu'au contraire il doit également être présent dans la zone B et dans la zone A.

Après l'opération de vibration décrite plus haut, la prise, le durcissement et le démoulage de la pièce sont obtenus dans les conditions habituelles de la préfabrication et sont donc bien connus de l'homme de métier.

Les granulats doivent avoir des caractéristiques d'isolation thermique et acoustique telles qu'elles sont définies, notamment par les normes NF, c'est à dire qu'elles doivent présenter un coefficient de conductivité thermique minimum et qui peut être variable selon les régions et selon les législations en vigueur.

Les additifs sont également de type connu de l'homme de métier et l'on sait, par exemple, que les additifs hydrofuges de masse donnent à la pièce obtenue une grande résistance à la reprise d'humidité ce qui évite que l'isolation s'amoindrisse avec le temps.

Le parement de la pièce 4, c'est à dire sa face 4b destinée à être à l'extérieur, peur rester brut de démoulage.

Il faut alors, puisque l'on s'impose un béton de type architectonique à aspect esthétique, que les composants fins soient en quantité suffisante, que le malaxage ait été mené pendant un temps suffisant pour que ces éléments fins soient répartis dans toute la masse, que l'on ait adopté un type de moule de bonne qualité et que l'on ait enduit l'intérieur du moule avec un produit de démoulage de type connu mais choisi pour assurer et préserver le bel aspect du parement.

La figure 4 représente une telle pièce et l'on voit que la zone C constitue simultanément le parement c'est à dire la face 4b.

Mais l'on peut aussi prévoir que le parement doit être traité, notamment par lavage ou brossage, lorsque l'on prévoit l'application sur les parois intérieures du moule d'un produit retardateur ou désactivant qui empêche la prise du liant hydraulique et qui laisse apparaître des granulats que l'on a prévus en fonction de leur densité apparente.

Sur la figure 5 on a représenté une telle pièce et l'on voit que l'on a prévu, parmi les composants du béton, non seulement les granulats isolants légers de la zone A mais aussi des granulats lourds tels que des fragments de quartz qui, lors de la vibration dans le moule 1, se partagent le volume de la zone C avec le ciment.

Après lavage ou brossage lorsque l'on a utilisé un produit retardataire ou désactivant, le ciment qui était seul visible sur le parement disparaît et laisse apparaître la partie extérieure des gros granulats encastrés dans la masse.

Ainsi que cela est connu, après démoulage et traitement de surface, la pièce en béton est placée sous abri couvert, très aéré, pendant une durée suffisante pour obtenir le séchage complet selon les conditions climatiques locales.

Pour assurer la protection hydrofuge on peut non pas utiliser des additifs hydrofuges de masse comme décrit plus haut, mais prévoir un traitement hydrofuge par imprégnation sur toutes les faces de la pièce exposées à l'humidité, autres que celles devant assurer la liaison par mortier avec d'autres pièces analogues pour constituer la structure de la construction.

De tels traitements sont bien connus et permettent de donner une véritable garantie d'efficacité pendant au moins dix années.

On va maintenant décrire quelques exemples de composition permettant d'obtenir avec le procédé conforme à l'invention, des pièces en béton satisfaisantes.

EXEMPLE 1

Pour obtenir 1m3 de béton prêt au moulage, on prend :

- Ciment Portland artificiel de type "55" gris..............350 Kg
- Sable lavé des carrières du Bessin en Calvados dont la granulométrie s'échelonne jusqu'à 5mm, de couleur jaune.........................175Kg
- fragments de pierre ponce connus dans le commerce sous le nom de "Termograin" et commercialisés par la Société COFRASIL 10 rue St. Maurice, NANTERRE (Hauts de Seine, France) de granulométrie allant jusqu'à 8mm........................400Kg
- Pierre ponce concassée connue dans le commerce sous le nom de "Termograin" de granulométrie allant jusqu'à 12mm.....................................500Kg
- Entraineur d'air........................................0,175Kg
- Eau en quantité suffisante (rapport $\frac{E}{C}$ donnant une consistance onctueuse au mélange)

Après mouillage et malaxage, ce mélange est introduit dans un moule métallique dont le fond est enduit avec un produit démoulant connu dans le commerce sous le nom de "D.C. 60H" et commercialisé par la Société LANCO France,101, rue Galliéni, BOULOGNE sur SEINE (Hauts de Seine, France).

On pourrait également utiliser un désactivant assurant un retard de prise du liant hydraulique tel que l'on peut ultérieurement le retirer superficiellement, ce désactivant pouvant être, notamment, celui connu dans le commerce sous le nom de "5/01 Pieri" et commercialisé par la Société PIERI, Sallenard, SAGY (Saône et Loire, France).

EXEMPLE 2

- Ciment Portland artificiel de type "55" blanc.......... 350Kg
- Quartz de Saint Gillis catégorie "C" de granulométrie échelonnée de 1 à 4................................ 150Kg
- "Termograin" de granulométrie allant jusqu'à 8......... 300Kg
- "Termograin" de granulométrie allant jusqu'à 12........ 625Kg
- Entraineur d'air................................... 0,175Kg

Ce mélange, après mouillage et malaxage, peut être coulé dans un moule par exemple.avec les opérations et au moyen des produits décrits ci-dessus pour l'exemple 1.

On note qu'avec ces deux premiers exemples, une composition conforme à l'invention comprend des composants qui se répartissent selon trois densités apparentes :

le "Termograin" est léger puisque sa densité apparente est au plus égale à 0,7;le sable est lourd puisque sa densité apparente atteint 1,5;le ciment est encore plus lourd puisqu'il atteint une densité apparente de 2,5.

On note que ces trois densités apparentes sont très différentes les unes des autres mais qu'elles restent toutes trois à l'intérieur d'une famille homogène.

Ainsi, le ciment constitue un milieu de densité moyenne dans lequel, par évolution facile, les autres éléments se répartissent en fonction de leur densité, lors de la vibration.

EXEMPLE 3

- Ciment Portland artificiel "55" blanc.................. 300Kg
- Quartz des carrières de Bonne-Nouvelle, le Calzat en Inzinzac
  (région de Lorient dans le département français du Morbihan)
  de granulométrie 3 à 8 ................................ 100Kg
- "Termograin" de granulométrie allant jusqu'à 8 ........ 500Kg
- verre expansé à cellules fermées tel que celui connu sous
  la marque "Expanver" et commercialisé par la Société
  EXPANVER,126 rue Jules Guesde,Levallois-Perret (Hauts de Seine France)
  de granulométrie échelonnée de 8 à 16................. 78Kg
- Entraineur d'air................................... 0,175Kg
- Eau...................................... en quantité suffisante
- Mouillage,malaxage,coulage et vibration comme indiqués plus haut.

EXEMPLE 4

- Ciment portland artificiel 55 blanc ................. 350Kg
- Quartz de Rhénanie de granulométrie échelonnée
  de 8 à 16 .................................................... 180Kg
- "Termograin" de granulométrie allant jusqu'à 8 ....... 500Kg
-"Expanver"de granulométrie échelonnée de 8 à 16 ....... 78Kg
- Entraîneur d'air ................................... 0,175Kg
- eau ................................... en quantité suffisante.

Après mouillage et malaxage, cette composition est prête à être coulée dans un moule comme indiqué ci-dessus.

On note que les compositions données ici pour les exemples 3 et 4 ont des composants qui s'étagent sur quatre densités apparentes :

.le ciment de densité apparente 1 à 2,5 est lourd;

.le quartz de densité apparente 1,4 est également lourd;

.le "Termograin" de densité apparente 0,7 est de poids moyen;

.l'Expanver"de densité apparente 0,14 est léger.

Selon la granulométrie du quartz, on peut obtenir avec ces deux derniers exemples des piéces du type représenté sur la figure 5.

Un béton conforme à l'invention présente les caractéristiques suivantes :

- masse volumique à sec .................... 750 à 1.300 Kg/m3
- conductibilité thermique .................. 0,17 à 0,45 W/m°C
- résistance à la compression .............. 6 à 10 MPa (méga Pascal)
- comportement au feu : incombustible (M zéro)
- affaiblissement accoustique : -25 à -40 décibels dans les hautes fréquences pour une épaisseur d'environ 16 centimètres.

Le ciment Portland artificiel qui a été cité à titre d'exemple, présente l'avantage d'avoir une excellente continuité de couleur.de sorte que malgré des réapprovisionnements successifs on peut obtenir un aspect extérieur de couleur et de caractéristiques constantes.

La durée de l'opération de vibration est fonction de la masse coulée,des produits mis en oeuvre,de la plasticité de l'ensemble, de la forme des pièces et de la nature du moule.

Ainsi, par exemple, plus la masse est sèche plus la vibration devra durer longtemps.

Plus la différence entre les densités apparentes est grande et plus la durée de la vibration doit être courte puisque les composants ont une tendance naturelle à la ségrégation.

L'invention n'est pas limitée aux seuls modes de réalisation décrits et représentés mais en embrasse au contraire toutes les variantes.

REVENDICATIONS

1 - Béton du type comprenant un liant hydraulique et un agrégat devant être mélangés et gâchés avec de l'eau, l'agrégat ayant un composant, au moins, qui est constitué d'un matériau alvéolaire à cellules fermées tel que de la pierre ponce, caractérisé en ce que l'agrégat comprend au moins deux composants dont les densités apparentes sont différentes et sont coordonnées avec la densité apparente du liant hydraulique pour que ces densités aient des valeurs qui soient à la fois distinctes et échelonnées de manière aussi régulière que possible depuis la densité apparente du liant hydraulique qui a la valeur la plus grande jusqu'à la densité apparente du matériau alvéolaire qui a la valeur la plus faible.

2 - Béton selon la revendication 1, caractérisé en ce que ses constituants , c'est à dire le liant hydraulique , les composants de l'agrégat , l'eau de gâchage et le cas échéant, un ou plusieurs additifs connus en soi , sont présents dans une proportion relative telle que le béton ait, après gâchage, une consistance qui s'oppose à l'étagement effectif spontané des constituants.

3 - Béton selon la revendication 2 , caractérisé en ce qu'il comprend les constituants ci-après , pour un volume final de 1 mètre cube :
- liant hydraulique de densité apparente
  d'environ 1 à 2,5 ........................ 280 à 380 Kg
- agrégat :
  . Composant minéral tel que sable,
    gravillon ou analogue de densité
    apparente inférieure à 1,5 ............. 80 à 200 Kg
  . matériau alvéolaire de densité
    apparente inférieure à 0,8 ............. 130 à 720 Kg

- eau :
  - . pour le mouillage de l'agrégat ............. 60 à 180 kilos
  - . pour le gâchage de l'ensemble .............. 140 à 200 kilos
- additifs éventuels .......................... en ajout

4 - Procédé pour l'obtention de pièces à partir d'un béton selon l'une quelconque des revendications 1 à 3 ci-dessus, caractérisé en ce que les constituants sont mélangés, mouillés et gâchés, puis que le produit obtenu est placé dans un moule étanche (1), puis que l'ensemble du moule (1) et de son contenu est soumis à des vibrations d'intensité et de durée établies pour qu'en fin d'opération les constituants soient étagés sans être séparés par une solution de continuité, en vue d'éviter tout clivage.

5 - Procédé selon la revendication 4 caractérisé en ce qu'après prise, durcissement et démoulage habituels, la pièce obtenue (4) est soumise à un traitement de surface tel que sablage, grésage et analogue, sur celle de ses faces (4b) qui correspond à la plus grande proportion de constituant dont la densité apparente a la valeur la plus grande et qui, simultanément, est destinée à former le parement de la pièce (4).

6 - Procédé selon la revendication 4, caractérisé en ce que le fond du moule (1) est recouvert, en tout ou en partie, d'un produit de démoulage ayant soit un effet retardateur de prise, soit de désactivation du liant hydraulique, afin de permettre le retrait de ce dernier sur la face correspondante (4b) de la pièce obtenue (4), par tout moyen connu.

7 - Pièce (4) obtenu avec un béton selon l'une quelconque des revendications 1 à 3 ci-dessus.

PL 1/1          0063526

FIG 1

FIG 2

FIG 3

FIG 4

FIG 5

**0063526**

Office européen
des brevets

**RAPPORT DE RECHERCHE EUROPEENNE**

Numéro de la demande

EP 82 40 0682

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | <u>DE - C - 705 126</u> (AUGUST TRACHTE)<br><br>* revendication unique; page 2, lignes 41-46; page 2, lignes 1-12 *<br><br>-- | 1,2,4, 7 | C 04 B 15/02<br>C 04 B 21/08 |
| A | <u>DE - A - 2 547 908</u> (PERLMOOSER <u>ZEMENTWERKE</u>)<br><br>* exemple de production 4; exemple d'application 2-4; pages 16-17 *<br><br>-- | 1,3,5 | |
| A | <u>FR - A - 2 218 307</u> (SEKISUI JUSHI <u>KABUSHIKI KAISHA</u>)<br><br>* revendication 1; figure 1 *<br><br>------ | 1-7 | |

| | DOMAINES TECHNIQUES RECHERCHES (Int. Cl. 3) |
|---|---|
| | C 04 B<br>B 28 B |

Le présent rapport de recherche a été établi pour toutes les revendications

| Lieu de la recherche | Date d'achèvement de la recherche | Examinateur |
|---|---|---|
| La Haye | 01-07-1982 | STANGE |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82